# EUROPÄISCHE PATENTANMELDUNG

(11) **EP 1 029 757 A2**
(43) Veröffentlichungstag der Anmeldung: **23.08.2000**
(21) Anmeldenummer: 00102368.8
(22) Anmeldetag: 04.02.2000
(51) Int. Cl.: B60R 25/04, B60R 25/02

(54) **Manuell betätigbarer Zündanlassschalter für eine schlüssellose Motorstartberechtigungskontrolleinrichtung eines Kraftfahrzeuges**

(30) Priorität: 17.02.1999 DE 29902770 U
(71) Anmelder: Leopold Kostal GmbH & Co. KG, 58507 Lüdenscheid (DE)
(72) Erfinder: Donner, Harald, 58540 Meinerzhagen (DE)
(74) Vertreter: Schröter & Haverkamp

(57) **Zusammenfassung**

Eine manuell betätigbarer Zündanlaßschalter für eine schlüssellose Motorstartberechtigungskontrolleinrichtung 1 eines Kraftfahrzeuges umfasst ein ausgehend von seiner Ausgangsstellung gegen die Kraft eines Federelementes in Richtung seiner Längsachse bewegbares und anschließend um seine Längsachse drehbares Stellglied 6 mit einer an seinem freien Ende angeordneten Handhabe 15, mit welcher Drehbewegung des Stellgliedes 6 eine Lenkspindelentriegelung bewirkbar und ein Motorstart herbeiführbar sind, auf welches Stellglied 6 eine durch die Motorstartberechtigungskontrolleinrichtung 1 angesteuerte Verriegelungseinrichtung 8 zum Sperren oder Freigeben einer nach positivem Abschluß einer Berechtigungsabfrage freigegebenen Stellgliedbewegung wirkt, wobei das Stellglied 6 nach einer Bewegungsfreigabe in seiner drehbaren Stellung durch ein von einem Steuergerät 9 ansteuerbares Haltemittel 8 gehalten ist und aus dieser Drehstellung in seine Ausgangsstellung durch die in dem Federelement gespeicherte Energie zurückbewegbar ist, wenn das Steuergerät durch einen von einem berechtigten Nutzer ausgelösten, von einer Betätigung des Zündanlaßschalters 2 unabhängigen Steuerbefehl beaufschlagt ist, wobei eine Lenkspindelverriegelung erst aktiviert ist, wenn sich das Stellglied 6 einen bestimmten Betrag in Richtung seiner Ausgangsstellung bewegt hat.

## Beschreibung

Die Erfindung bezieht sich auf einen Zündanlaßschalter, der im Rahmen einer schlüssellosen Motorstartberechtigungskontrolleinrichtung, einem sogenannten Keyless-Go-System eingesetzt ist.

Schlüssellose Motorstartberechtigungskontrolleinrichtungen sind bekannt und werden bei Kraftfahrzeugen zum Erhöhen der Bediensicherheit sowie des Bedienkomforts eingesetzt. Eine solche Motorstartberechtigungskontrolleinrichtung umfaßt eine kraftfahrzeugseitig angeordnete Sende-Empfangs-Einrichtung zum Durchführen einer die Berechtigung eines von einem Benutzer mitgeführten Identifakationsgebers (ID-Geber) abfragenden Kommunikation zwischen der Sende-Empfangs-Einrichtung und dem ID-Geber. Die Kommunikation erfolgt auf einer Funkstrecke. Wird systemseitig erkannt, daß sich ein nutzungsberechtigter ID-Geber innerhalb des Kraftfahrzeuges befindet, wird eine Betätigungseinrichtung freigeschaltet, mit der anschließend das Lenkrad mechanisch entriegelt und der gewünschte Motorstart ausgelöst wird.

Als Einrichtung zum Ent- und Verriegeln des Lenkrades ist eine elektromechanische Einrichtung vorgesehen, bei der mittels eines Hubmagneten ein Lenkradriegel aus seiner in die Lenkspindel eingreifenden verriegelnden Stellung herausgezogen wird. Der Motorstart wird anschließend durch entsprechendes Ansteuern eines elektronischen Zündschlosses herbeigeführt.

Zum Starten des gesamten Vorganges einschließlich des Durchführens der gewünschten Berechtigungsabfrage ist bei einer vorbekannten Einrichtung in den Schaltknüppel oder Gangwahlhebel oberseitig ein elektrischer Drucktaster integriert. Durch Drücken dieses Tasters und durch gleichzeitiges Treten des Bremspedals, wobei durch letztere Maßnahme sichergestellt ist, daß tatsächlich der Fahrersitz besetzt ist, wird durch die Sende-Empfangs-Einrichtung der Frage-Antwort-Dialog gestartet. Diesem Dialog kann ein Wecksignal vorgeschaltet sein mit dem der ID-Geber aus seinem Ruhemodus in seinen Arbeitsmodus geschaltet wird, falls sich dieser nicht in seinem Arbeitsmodus befindet. Nach Abschluß dieses Dialoges wird, wenn der ID-Geber systemseitig als nutzungsberechtigt erkannt worden ist, durch die der Sende-Empfangs-Einrichtung zugeordnete Auswerteeinheit die Einrichtung zum Entriegeln des Lenkrades angesteuert sowie über den elektronischen Zündanlaßschalter der Motorstart herbeigeführt. Im Gegenzug wird ein Motorstop durch eine Betätigung des Drucktasters bei gleichzeitigem Betätigen des Bremspedals herbeigeführt, wobei ein tatsächlicher Motorstop erst dann ausgelöst wird, wenn weitere Zustandsbedingungen, beispielsweise Motordrehzahl befindet sich im Leerlauf oder Radsensoren stellen einen Stillstand fest, erfüllt sind.

Die bekannten schlüssellosen Motorstartberechtigungskontrollsysteme sind zumeist in schlüssellose Zugangsberechtigungskontrollsysteme eingebunden. Zum Durchführen der gewünschten Frage-Antwort-Dialoge können dieselben Hardware-Komponenten eingesetzt werden.

Auch wenn mit einer solchen, vorbeschriebenen Motorstartberechtigungskontrolleinrichtung der Bedienkomfort gegenüber herkömmlichen Schlüsselsystemen erhöht ist, stellt sich als nachteilig mitunter der von einer solchen elektromechanischen Einrichtung zum Entriegeln des Lenkrades benötigte Einbauraum gegenüber herkömmlichen mechanisch betätigbaren Systemen dar, da im Bereich der Lenksäule zahlreiche weitere Module angeordnet werden müssen.

Neben diesen bekannten schlüssellosen Motorstartberechtigungskontrolleinrichtungen besteht der Wunsch nach einer Motorstartberechtigungskontrolleinrichtung mit einem Zündanlaßschalter, dessen wesentliche Komponenten, nämlich das Lenkradschloß sowie die elektrische Schaltereinheit beibehalten und diese Komponenten auch im Rahmen einer schlüssellosen Motorstartberechtigungskontrolleinrichtung eingesetzt werden können. Dabei ist insbesondere auch der geringe, im Bereich der Lenksäule zur Verfügung stehende Raum zu berücksichtigen. Es ist daher Aufgabe der Erfindung, einen manuell betätigbaren Zünd-anlaßschalter für eine schlüssellose Motorstartberechtigungskontrolleinrichtung eines Kraftfahrzeuges bereitzustellen, der diesen Anforderungen genügt.

Diese Aufgabe wird erfindungsgemäß durch einen manuell betätigbaren Zündanlaßschalter für eine schlüssellose Motorstartberechtigungskontrolleinrichtung eines Kraftfahrzeuges gelöst, der ein ausgehend von seiner Ausgangsstellung gegen die Kraft eines Federelementes in Richtung seiner Längsachse bewegbares und anschließend um seine Längsachse drehbares Stellglied mit einer an seinem freien Ende angeordneten Handhabe aufweist, mit welcher Drehbewegung des Stellgliedes eine Lenkspindelentriegelung bewirkbar und ein Motorstart herbeiführbar sind, auf welches Stellglied eine durch die Motorstartberechtigungskontrolleinrichtung angesteuerte Verriegelungseinrichtung zum Sperren oder Freigeben einer nach positivem Abschluß einer Berechtigungsabfrage freigegebenen Stellgliedbewegung wirkt, wobei das Stellglied nach einer Bewegungsfreigabe in seiner drehbaren Stellung durch ein von einem Steuergerät ansteuerbares Haltemittel gehalten ist und aus dieser Drehstellung in seine Ausgangsstellung durch die in dem Federelement gespeicherte Energie zurückbewegbar ist, wenn das Steuergerät durch einen von einem berechtigten Nutzer ausgelösten, von einer Betätigung des Zündanlaßschalters unabhängigen Steuerbefehl beaufschlagt ist, wobei eine Lenkspindelverriegelung erst aktiviert ist, wenn sich das Stellglied um einen bestimmten Betrag in Richtung seiner Ausgangsstellung bewegt hat.

Der erfindungsgemäße Zündanlaßschalter umfaßt ein drehschalterartig ausgebildetes Stellglied, an dessen einem Ende eine Handhabe angeordnet ist. Das Stellglied ist von seiner Ausgangsstellung gegen die Kraft eines Federelementes in Richtung seiner Längsachse bewegbar und kann anschließend um seine Längsachse zum Bewirken einer Lenkspindelentriegelung und zum Herbeiführen des gewünschten Motorstartes gedreht werden. Auf das Stellglied wirkt eine durch die Motorstartberechtigungskontrolleinrichtung angesteuerte Verriegelungseinrichtung zum Sperren oder Freigeben einer Stellgliedbewegung, je nachdem, ob im Zuge einer zuvor durchgeführten Berechtigungsabfrage ein berechtigter Nutzer detektiert worden ist oder nicht. Nach positivem Abschluß einer solchen Berechtigungsanfrage wird die Verriegelungseinrichtung zum Freigeben der Stellgliedbewegung angesteuert. Dabei ist wesentlich, daß vor einer Freigabe der Stellgliedbewegung eine Drehbewegung des Stellgliedes verhindert ist.

Von seiner Ausgangsstellung wird das Stellglied in einem ersten Bewegungsschritt um einen bestimmten Bewegungshub in Richtung seiner Längsachse bewegt, bis sich dieses in seiner drehbaren Stellung befindet. In der drehbaren Stellung ist das Stellglied um seine Achse drehbar, damit - wie auch bei einem herkömmlichen schlüsselbetätigten Zündanlaßschalter - zunächst die Lenkspindel entriegelt und anschließend der Motorstart herbeigeführt werden kann. Durch eine Haltevorrichtung ist das Stellglied in seiner drehbaren Position gehalten, so daß dieses nicht durch die auf das Stellglied wirkende Federkraft in seine Ausgangsstellung zurückgeführt wird. In dieser Stellung verbleibt das Stellglied auch nach einem Abstellen des Motors durch Zurückdrehen des Stellgliedes. Das das Stellglied in dieser Stellung haltende Haltemittel ist an ein Steuergerät angeschlossen, welches das Haltemittel dann mit einem Steuersignal zum Freigeben des Stellgliedes beaufschlagt, damit dieses durch die in der Feder gespeicherte Energie in seine Ausgangsstellung zurückgedrückt werden kann, wenn von einem berechtigten Nutzer eine vorbestimmte Aktion ausgelöst worden ist und in Folge dieser Aktion das Steuergerät systemseitig einen entsprechenden Steuerbefehl erhalten hat. Eine solche Aktion kann beispielsweise das Einlegen eines Gangwahlhebels in die Park-Position oder das Betätigen einer Zentralverriegelung sein. Erst wenn durch die Haltemittel die Rückbewegung des Stellgliedes freigegeben worden ist, wird die Lenkspindelverriegelung aktiviert, wenn sich das Stellglied um einen bestimmten Betrag in Richtung seiner Ausgangsstellung bewegt hat. Dadurch ist sichergestellt, daß auch bei abgeschaltetem Motor ein Lenken des Kraftfahrzeuges möglich ist, solange der Benutzer nicht die zum Verriegeln der Lenkspindel notwendige Aktion auslöst.

In einem Ausführungsbeispiel ist vorgesehen, daß zur Realisierung der auf das Stellglied wirkenden Verriegelungseinrichtung und der das Stellglied in seiner Drehstellung haltenden Haltemittel eine einzige elektromagnetisch betätigbare Riegeleinrichtung vorgesehen ist. Eine solche Anordnung ist insbesondere im Hinblick auf einen Einsatz möglichst weniger zusätzlicher Komponenten sinnvoll. Eine solche Riegeleinrichtung umfaßt zweckmäßigerweise einen Riegelbolzen, der in seiner eine Stellgliedbewegung sperrenden Stellung die achsiale Bewegbarkeit des Stellgliedes blockiert. Zum Blockieren einer Drehbewegung des Stellgliedes kann vorgesehen sein, einen Abschnitt des Steligliedes, zweckmäßigerweise im Bereich des vorderen Endes tangential abgeflacht auszubilden und in der verriegelten Stellgliedstellung diesen geraden Abschnitt an einen entsprechend komplementär konfigurierten Kulissenstein grenzen zu lassen. Bei einer Freigabe des Stellgliedes wird der Riegelbolzen durch einen Hubmagneten aus seiner sperrenden Stellung in seine die Bewegung des Stellgliedes freigebende Stellung bewegt. Befindet sich das Stellglied in seiner Drehstellung, greift der Riegelbolzen in eine in die Mantelfläche des Stellgliedes eingebrachte Haltenut ein, so daß eine Rückführung des Stellgliedes durch die Federkraft verhindert ist.

In einem weiteren Ausführungsbeispiel ist vorgesehen, daß die auf das Stellglied wirkende Verriegelungseinrichtung und dieses in seiner Drehstellung haltende Haltemittel als unabhängig voneinander betätigbare elektromagnetische Riegeleinrichtungen realisiert sind. Bei einer derartigen Ausgestaltung kann vorgesehen sein, daß der Riegelbolzen der Verriegelungseinrichtung in eine der Längserstreckung des Stellgliedes folgende Nut zum Verhindem einer Drehbewegung des Stellgliedes eingreift. Gleichwohl kann das Stellglied in seiner achsialen Richtung bewegbar sein. Bei einer solchen Ausgestaltung kann das Stellglied mit einem Schalter zum Auslösen der Berechtigungsabfrage durch die Motorstartberechtigungskontrolleinrichtung zusammenwirken, wobei dieser Schalter geschlossen ist, wenn mit dem Stellglied ein vorbestimmter achsialer Hub betätigt worden ist.

Weitere Vorteile und Ausgestaltungen der Erfindung sind Bestandteil der übrigen Unteransprüche sowie der nachfolgenden Beschreibung von Ausführungsbeispielen unter Bezugnahme auf die beigefügten Figuren. Es zeigen:
- **Fig. 1**: eine schematisierte Darstellung einer schlüssellosen Motorstartberechtigungskontrolleinrichtung mit einem Zündanlaßschalter in seiner Ausgangsstellung,
- **Fig. 2**: die Motorstartberechtigungskontrolleinrichtung der Figur 1 nach einem Motorstart mit dem in seiner Fahrt-Position befindlichen Zündanlaßschalter,
- **Fig. 3a**: das Stellglied des Zündanlaßschalters der Figuren 1 und 2 mit einer Verriegelungseinrichtung in einer zum Teil geschnittenen Seitenansicht in seiner Ausgangsstellung,
- **Fig. 3b**: das Stellglied der Figur 3a in einem Querschnitt entlang der Schnittlinie A-B,
- **Fig. 4a**: das Stellglied der Figur 3a in seiner Fahrt-Position,
- **Fig. 4b**: einen Querschnitt durch das Stellglied der Figur 4a entlang der Schnittlinie C-D,
- **Fig. 5a**: ein weiteres Stellglied zur Verwendung in einem Zündanlaßschalter entsprechend demjenigen der Figuren 1 und 2 in einer schematisierten, zum Teil geschnittenen Seitenansicht in seiner Ausgangsstellung,
- **Fig. 5b**: einen Querschnitt durch das Stellglied der Figur 5a entlang der Schnittlinie E-F,
- **Fig. 6a**: das Stellglied der Figur 5a in seiner die Berechtigungsabfrage auslösenden Stellung,
- **Fig. 6b**: das Stellglied der Figur 6a in einem Querschnitt entlang der Schnittlinie G-H,
- **Fig. 7a**: das Stellglied der Figuren 5a und 6a in seiner Fahrt-Position und
- **Fig. 7b**: einen Querschnitt durch das Stellglied der Figur 7a entlang der Schnittlinie I-J.

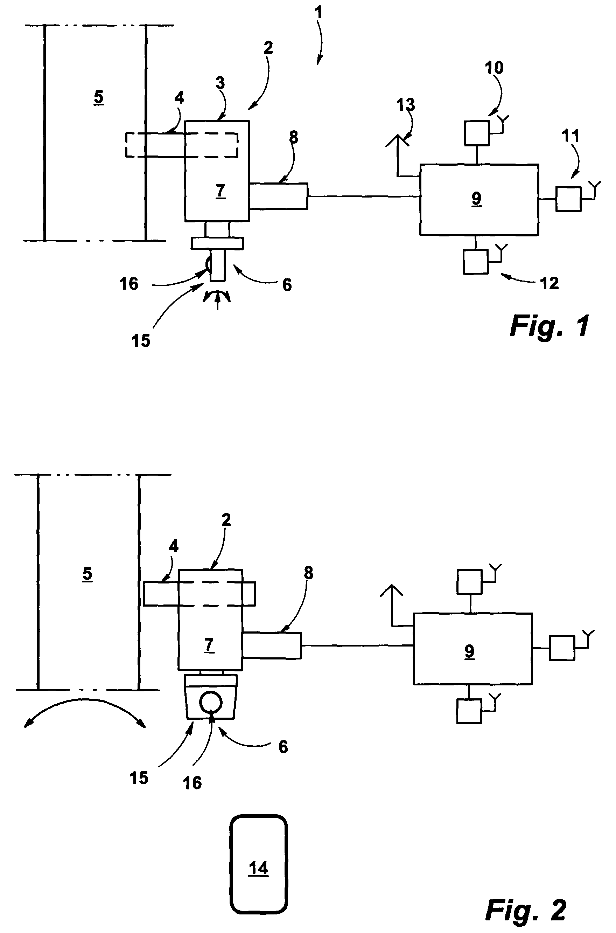

Eine schlüssellose Motorstartberechtigungskontrolleinrichtung 1 umfaßt einen Zündanlaßschalter 2. In den Zündanlaßschalter 2 ist ein mechanisches Lenkradschloß 3 integriert, dessen Riegel 4 in der in Figur 1 dargestellten Stellung die Drehbewegung der Lenkspindel 5 durch radiales Eingreifen in eine in die Lenkspindel 5 eingebrachte Riegelaufnahme blockiert. Der Zündanlaßschalter 2 umfaßt ein Stellglied 6, welches eine gegenständliche Einheit mit dem Zündanlaßschalter 2 bildet. Das Stellglied 6 ist sowohl um seine Längsachse drehbar, als auch entsprechend der Pfeilrichtung in das Gehäuse 7 des Zündanlaßschalters 2 eindrückbar. Dem Zündanlaßschalter 2 ist ferner eine Verriegelungseinrichtung 8 zugeordnet, mit der mechanisch die Bewegung des Stellelementes 6 blockierbar ist. In seiner in Figur 1 gezeigten Stellung befindet sich die Verriegelungseinrichtung 8 in seiner eine Stellgliedbewegung blockierenden Stellung.

Die Motorstartberechtigungskontrolleinrichtung 1 umfaßt ferner eine Sende-Empfangs-Einrichtung 9 mit einer Auswerteeinheit, die zum Durchführen eines Frage-Antwort-Dialoges mit einem in Figur 2 dargestellten ID-Geber 14 vorgesehen ist. Die dargestellte Sende-Empfangs-Einrichtung 9 besteht aus drei Sendern 10, 11, 12, die jeweils unterschiedlichen Kraftfahrzeugseiten zugeordnet sind. Der Sender 10 ist auf der Fahrerseite des Kraftfahrzeuges, der Sender 11 auf der Beifahrerseite angeordnet und der Sender 12 dem Heckbereich zugeordnet. Die Sendebereiche der Sender 10, 11, 12 überlappen sich lediglich im Innenraum des Kraftfahrzeuges. Die Sender 10, 11, 12 dienen zum Senden eines an den ID-Geber 14 gerichteten Fragesignals, dem ein Wecksignal vorgeschaltet ist, wobei die Sende-Empfangs-Einrichtung 9 mit den Sendern 10, 11, 12 so betrieben ist, daß eine Ortung des ID-Gebers 14 innerhalb des Kraftfahrzeuges möglich ist. Dies kann beispielsweise durch Senden ortscodierter Fragesignale erfolgen, welche ortscodierten Signale nach einem Empfang durch den ID-Geber 14 in einem Antworttelegramm enthalten sind. Die Sende-Empfangs-Einrichtung 9 umfaßt ferner eine zentrale Empfangseinheit mit einer Empfangsantenne 13, über die die von dem ID-Geber 14 zurückgesendeten Signale empfangbar sind. Zum Starten der Kommunikation zwischen der Sende-Empfangs-Einrichtung 9 und dem ID-Geber 14 ist ein an der Handhabe 15 des Stellgliedes 6 angeordneter elektrischer Drucktaster 16 vorgesehen.

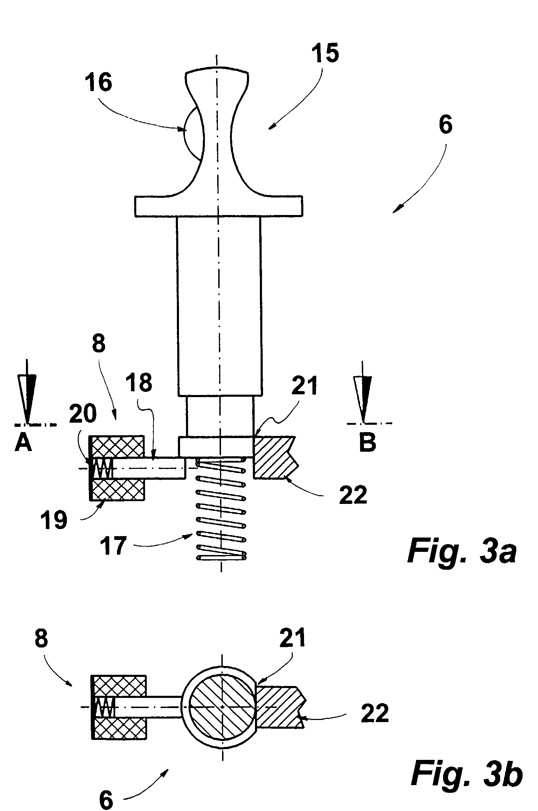

In den Figuren 3a bis 4b ist das Stellglied 6 mit der auf dieses wirkenden Verriegelungseinrichtung 8 in seinen unterschiedlichen Stellungen gezeigt. Figur 3a zeigt das Stellglied 6 in seiner Ausgangsstellung. In dieser Ausgangsstellung ist die gegen die Schraubenfeder 17 gerichtete achsiale Bewegbarkeit des Stellgliedes 6 durch den Riegelbolzen 18 der Verriegelungseinrichtung 8 blockiert. Der Riegelbolzen 18 ist durch einen Hubmagneten 19 gegen die Kraft einer Feder 20 in seiner achsialen Richtung bewegbar. Der an die untere Stirnseite des Stellgliedes 6 grenzende Mantelabschnitt ist tangential eine Gleitfläche 21 ausbildend abgeflacht. Diese Gleitfläche 21 grenzt an einen Kulissenstein 22, so daß in dieser Stellung des Stellgliedes 6 eine Drehbewegung verhindert ist. Aus der Schnittdarstellung der Figur 3b ist die abgeflachte Konfiguration der Gleitfläche 21 und der mit seiner flachen Seite an die Gleitfläche 21 angrenzende Kulissenstein 22 erkennbar.

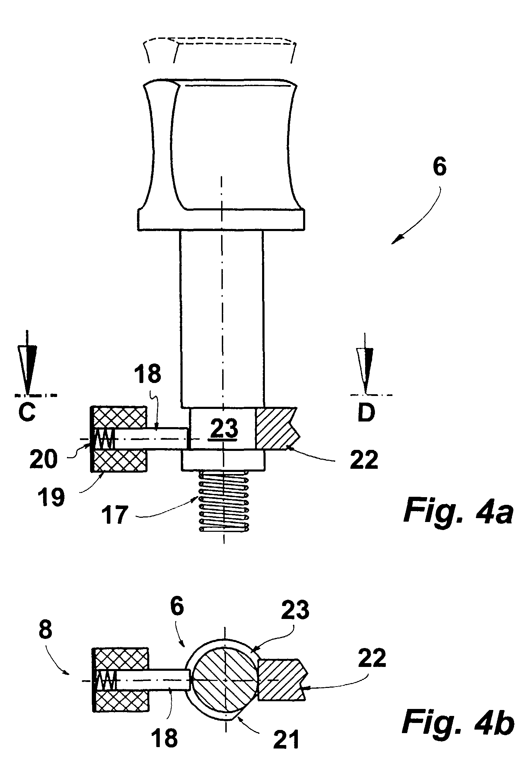

Durch Betätigen des Drucktasters 16 wird systemseitig die Berechtigungsabfrage ausgelöst. Nach einem positiven Abschluß dieser Berechtigungsabfrage, bei der festgestellt worden ist, daß auf dem Fahrersitz ein berechtigter Nutzer Platz genommen hat, wird die Verriegelungseinrichtung 8 zum Bewegen des Riegelbolzens 18 angesteuert, so daß der Riegelbolzen 18 gegen die Feder 20 in den Hubmagneten 19 eingezogen wird. Die achsiale Bewegung des Stellgliedes 6 ist dann nicht mehr blockiert, so daß dieses durch Eindrücken achsial bewegt werden kann. Im Bereich des unteren Abschnittes des Stellgliedes 6 ist eine umfänglich ausgebildete Halte- und Führungsnut 23 eingebracht. Ist das Stellglied 6 in achsialer Richtung zur Schraubenfeder 17 hin um einen vorbestimmten Betrag bewegt worden, wird der Hubmagnet 19 abgeschaltet, so daß nunmehr der Riegelbolzen 18 durch die Federkraft 20 zur Mantelfläche des Stellgliedes hin gedrückt wird. Ist das Stellglied 6 soweit eingedrückt worden, daß sich dieses in seiner Drehposition befindet, greift der Riegelbolzen 18 in die Halte- und Führungsnut 23 ein, so daß in dieser Stellung eine Rückführung des Stellgliedes 6 durch die Kraft der Feder 17 in seine Ausgangsstellung verhindert ist. Die Halte- und Führungsnut 23 ist ausreichend breit ausgebildet, damit in dieser auch der Kulissenstein 22 eingreifen kann. Eine Drehbewegung des Stellgliedes 6 ist begrenzt, so daß der Riegelbolzen 18 in keiner der möglichen Drehwinkelstellungen des Stellgliedes 6 in den Bereich der Gleitfläche 21 gelangt. Figur 4b zeigt das Stellglied 6 in seiner Fahrt-Position im Querschnitt.

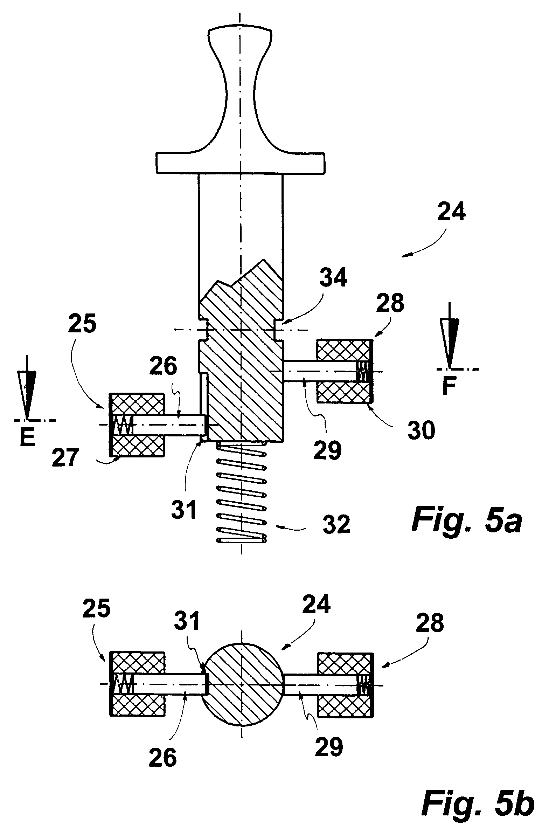

Figur 5a zeigt ein weiteres Stellglied 24, welches ähnlich aufgebaut ist wie das zu den Figuren 3a bis 4b beschriebene Stellglied 6. Auf dieses Stellglied wirkt eine Verriegelungseinrichtung 25 bestehend aus einem Riegelbolzen 26 und einem Hubmagneten 27 sowie eine Halteeinrichtung 28 umfassend einen Haltebolzen 29 und einen Hubmagneten 30. Die Verriegelungseinrichtung 25 dient zum Blockieren einer Drehbewegung des Stellgliedes 24, wenn sich dieses in seiner Ausgangsstellung befindet und wenn eine Drehbewegung zur Herbeiführung einer Lenkspindelentriegelung sowie eines Motorstartes noch nicht freigegeben ist. Der Riegelbolzen 26 greift in dieser Stellung in eine der Längsachse des Stellgliedes 24 folgende Nut 31 ein, wobei die Nutweite im wesentlichen dem Durchmesser des Riegelbolzens 26 entspricht. Das Eingreifen des Riegelbolzens 26 in die Nut 31 ist deutlich aus dem Querschnitt der Figur 5b erkennbar. Die Nut 31 weist eine Längserstreckung auf damit das Stellglied 24 in Richtung seiner Längsachse gegen die Kraft einer Schraubenfeder 32 bewegbar ist. Diese Bewegungsfreiheit wird ausgenutzt, um durch diese Bewegung einen in den Figuren nicht dargestellten elektrischen Schalter zu schließen, mit dem die Berechtigungsabfrage ausgelöst wird. Dieser Schalter wird geschlossen, wenn das Stellglied 24 in Richtung seiner Längsachse zur Schraubenfeder 32 hin bewegt wird.

Der Haltebolzen 29 der Halteeinrichtung 28 wird durch die Kraft einer Feder 33 stirnseitig gegen die äußere Mantelfläche des Stellgliedes 24 gedrückt. Wirkung entfaltet der Haltebolzen 29 in dieser Stellung nicht.

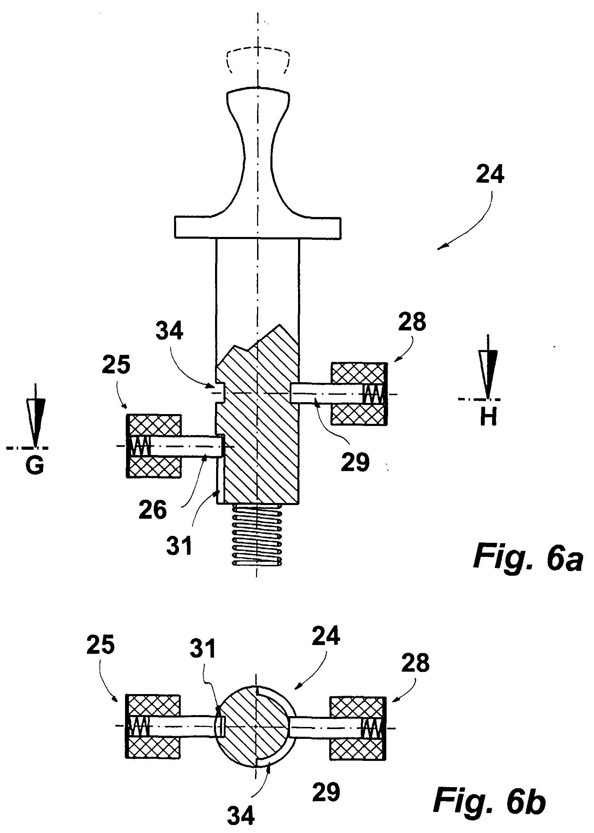

Figur 6a zeigt das Stellglied 26 in seiner die drahtlose Berechtigungsabfrage durchführenden Stellung. In dieser Stellung greift bereits der Haltemagnet 29 der Halteeinrichtung 28 in eine umfänglich in das Stellglied 24 eingebrachte Haltenut 34 ein, da sich das Stellglied 24 in dieser Stellung bereits in seiner Drehstellung befindet. Eine Drehbewegung des Stellgliedes 24 ist jedoch erst dann freigegeben, wenn der Riegelbolzen 26 der Verriegelungseinrichtung 25 aus der Nut 31 herausbewegt worden ist. Endet der Berechtigungsabfragedialog negativ, so daß eine Entriegelung des Stellgliedes 24 zum Freigeben der Drehbewegung nicht erfolgt, wird die Halteeinrichtung 28 mit einem Steuerbefehl beaufschlagt, der zu einem Bewegen des Hubmagneten 29 aus der Haltenut 34 resultiert. Das Stellglied 24 wird dann durch die in der Schraubenfeder 32 gespeicherte Energie in seine Ausgangsstellung zurückbewegt.

Das Eingreifen des Riegelbolzens 26 in die Nut 31 sowie des Haltebolzens 29 in die Haltenut 34 ist auch in dem Querschnitt der Figur 6b erkennbar.

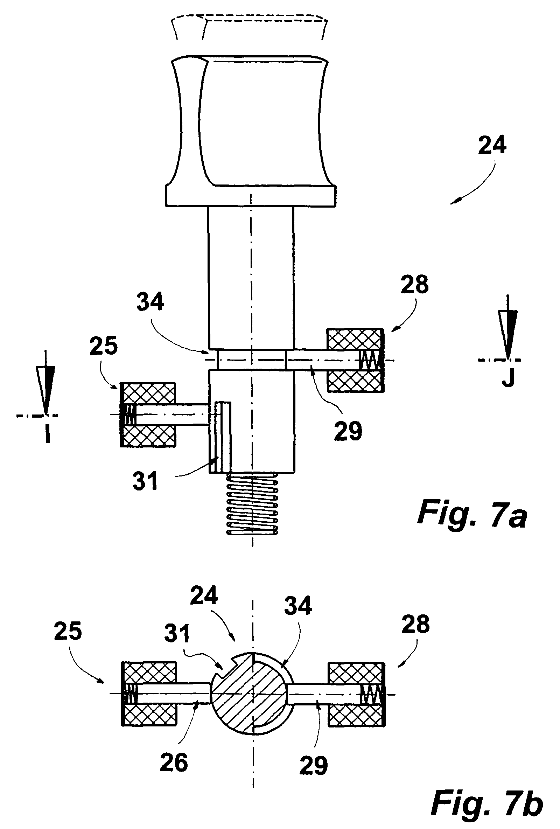

Nach positivem Abschluß der Berechtigungsabfrage wird der Riegelbolzen 26 durch Betätigen der Verriegelungseinrichtung 25 aus der Nut 31 herausbewegt, so daß nunmehr die Drehbewegung des Stellgliedes 24 freigegeben ist (vgl. Figur 7a). Im gesamten Drehwinkelbereich des Stellgliedes 24 greift der Haltebotzen 29 in die Haltenut 34 ein, so daß eine Zurückbewegung des Stellgliedes in seine Ausgangsstellung nicht möglich ist. Die Fahrt-Position des Stellgliedes 24, bei der der Haltebolzen 29 in die Haltenut 34 eingreift, ist auch aus dem Querschnitt der Figur 7b erkennbar. In dieser Position liegt die Stirnfläche des Riegelbolzens 26 auf der Mantelfläche des Stellgliedes 24 auf.

Nach einem Motorstop, der dadurch herbeigeführt wird, daß das Stellglied 6, 24 in seine Drehausgangsstellung zurückgedreht wird, verbleibt das Stellglied 6, 24 zunächst in seiner Drehposition. Eine Aktivierung der Lenkspindelverriegelung hat durch Zurückdrehen des Stellgliedes 6, 24 noch nicht stattgefunden. Erst wenn durch den berechtigten Nutzer eine bestimmte Aktion ausgelöst wird, von der systemseitig darauf geschlossen werden kann, daß eine Lenkspindelverriegelung erfolgen soll, wird der Riegelbolzen 18 bzw. der Haltebolzen 29 zum Freigeben des Stellgliedes 6, 24 bewegt, damit dieses durch die in der Schraubenfeder 17, 32 gespeicherte Energie in seine Ausgangsstellung zurückbewegt werden kann. Im Zuge dieser achsialen Rückbewegung des Stellgliedes 6, 24 erfolgt nach Zurücklegen eines bestimmten Rückbewegungshubes eine Aktivierung der Lenkspindelverriegelung. Bei den in den Figuren dargestellten Ausführungsbeispielen ist als die von dem berechtigten Nutzer auszulösende Aktion die Betätigung der Zentralverriegelung vorgesehen.

Aus der Beschreibung der Erfindung wird deutlich, daß zur Verwirklichung des beschriebenen Zündanlaßschalters die wesentlichen Bestandteile vorbekannter schlüsselbetätigter Zündanlaßschalter beibehalten werden können. Es ist lediglich erforderlich, das Schloß gegen ein Stellglied mit entsprechenden Verriegelungseinrichtungen auszutauschen. Der dadurch benötigte Einbauraum ist wenn überhaupt nur unwesentlich größer als der für einen vorbekannten schlüsselbetätigten Zündanlaßschalter.

### Zusammenstellung der Bezugszeichen

- 1: Motorstartberechtigungskontrolleinrichtung
- 2: Zündanlaßschalter
- 3: Lenkradschloß
- 4: Riegel
- 5: Lenkspindel
- 6: Stellglied
- 7: Gehäuse
- 8: Verriegelungseinrichtung
- 9: Sende-Empfangs-Einrichtung
- 10: Sender
- 11: Sender
- 12: Sender
- 13: Empfangsantenne
- 14: ID-Geber
- 15: Handhabe
- 16: Drucktaster
- 17: Schraubenfeder
- 18: Riegelbolzen
- 19: Hubmagnet
- 20: Feder
- 21: Gleitfläche
- 22: Kulissenstein
- 23: Halte-/Führungsnut
- 24: Stellglied
- 25: Verriegelungseinrichtung
- 26: Riegelbolzen
- 27: Hubmagnet
- 28: Halteeinrichtung
- 29: Haltebolzen
- 30: Hubmagnet
- 31: Nut
- 32: Schraubenfeder
- 33: Feder
- 34: Haltenut

## Patentansprüche

1. Manuell betätigbarer Zündanlaßschalter für eine schlüssellose Motorstartberechtigungskontrolleinrichtung (1) eines Kraftfahrzeuges, der ein ausgehend von seiner Ausgangsstellung gegen die Kraft eines Federelementes (17, 32) in Richtung seiner Längsachse bewegbares und anschließend um seine Längsachse drehbares Stellglied (6, 24) mit einer an seinem freien Ende angeordneten Handhabe (15) aufweist, mit welcher Drehbewegung des Stellgliedes (6, 24) eine Lenkspindelentriegelung bewirkbar und ein Motorstart herbeiführbar sind, auf welches Stellglied (6, 24) eine durch die Motorstartberechtigungskontrolleinrichtung (1) angesteuerte Verriegelungseinrichtung (8, 25) zum Sperren oder Freigeben einer nach positivem Abschluß einer Berechtigungsabfrage freigegebenen Stellgliedbewegung wirkt, wobei das Stellglied (6, 24) nach einer Bewegungsfreigabe in seiner drehbaren Stellung durch ein von einem Steuergerät (9) ansteuerbares Haltemittel (8, 28) gehalten ist und aus dieser Drehstellung in seine Ausgangsstellung durch die in dem Federelement (17, 32) gespeicherte Energie zurückbewegbar ist, wenn das Steuergerät durch einen von einem berechtigten Nutzer ausgelösten, von einer Betätigung des Zündanlaßschalters (2) unabhängigen Steuerbefehl beaufschlagt ist, wobei eine Lenkspindelverriegelung erst aktiviert ist, wenn sich das Stellglied (6, 24) einen bestimmten Betrag in Richtung seiner Ausgangsstellung bewegt hat.

2. Zündanlaßschalter nach Anspruch 1, **dadurch gekennzeichnet**, daß eine einzige elektromagnetisch betätigbare Riegeleinrichtung (8) zur Realisierung der auf das Stellglied wirkenden Verriegelungseinrichtung und der das Stellglied in seiner Drehstellung haltenden Mittel vorgesehen ist.

3. Zündanlaßschalter nach Anspruch 2, **dadurch gekennzeichnet**, daß ein der Riegeleinrichtung (8) zugeordneter Riegelbolzen (18) in seiner Sperrstellung die in Richtung der Längsachse des Stellgliedes (6) gerichtete Bewegung blockiert und daß zum Sperren einer Drehbewegung in der gesperrten Stellgliedstellung ein tangential flach ausgebildeter Abschnitt (21) des Stellgliedes (6) an einen die Drehbewegung sperrenden Kulissenstein (22) grenzt.

4. Zündanlaßschalter nach Anspruch 1, **dadurch gekennzeichnet**, daß als die auf das Stellglied (24) wirkende Verriegelungseinrichtung und die das Stellglied (24) in seiner Drehstellung haltenden Mittel unabhängig voneinander elektromagnetisch betätigbare Riegeleinrichtungen (25, 28) vorgesehen sind und daß das Stellglied (24) mit einem elektrischen, durch die ausgehend von der Ausgangsstellung des Stellgliedes (24) achsiale Betätigungsbewegung schließbaren Schalter zum Auslösen einer Berechtigungsabfrage durch die Motorstartberechtigungskontrolleinrichtung (1) zusammenwirkt.

5. Zündanlaßschalter nach Anspruch 4, **dadurch gekennzeichnet**, daß ein Riegelbolzen (26) der Verriegelungseinrichtung (25) zum Sperren der Drehbewegung des Stellgliedes (24) in eine der Längserstreckung des Stellgliedes (24) folgende Nut (31) eingreift und daß ein den Haltemitteln (28) zum Halten des Stellgliedes (24) in seiner drehbaren Stellung zugeordneter Riegelbolzen (29) in eine umfänglich in das Stellglied (24) eingebrachte Nut (34) eingreift.

6. Zündanlaßschalter nach einem der Ansprüche 1 bis 5, **dadurch gekennzeichnet**, daß der die Zurückführung des Stellgliedes (6, 24) in seine Ausgangsstellung auslösende Steuerbefehl an eine Betätigung der Zentralverriegelung des Kraftfahrzeuges gekoppelt ist.
